# EUROPÄISCHE PATENTSCHRIFT

(11) **EP 0 857 562 B1**
(45) Veröffentlichungstag und Bekanntmachung des Hinweises auf die Patenterteilung: **03.05.2006**
(21) Anmeldenummer: 97117854.6
(22) Anmeldetag: 15.10.1997
(51) Int. Cl.: B29C 57/10, B29C 61/06, H02G 15/04

(54) **Schrumpfkappe und Verfahren zu ihrer Herstellung sowie mit der Schrumpfkappe versehenes Bauteil**
Shrinkcap and process for making the same as well as construction element foreseen with that shrinkcap
Capuchon rétractable et procédé pour sa fabrication ainsi qu'élément de construction pourvu de ce capuchon rétractable

(30) Priorität: 11.02.1997 DE 19705153
(43) Veröffentlichungstag der Anmeldung: 12.08.1998
(73) Patentinhaber: Hofsäss, Marcel, 75305 Neuenbürg (DE)
(72) Erfinder: Hofsäss, Marcel, 75305 Neuenbürg (DE)
(74) Vertreter: Otten, Hajo

(56) Entgegenhaltungen:
- DE-U- 9 010 609
- FR-A- 2 478 389
- GB-A- 1 151 788
- GB-A- 1 412 762
- US-A- 4 515 648
- US-A- 4 578 296
- US-A- 4 896 904
- US-A- 5 124 513
- PATENT ABSTRACTS OF JAPAN vol. 010, no. 118 (M-475), 2. Mai 1986 & JP 60 248335 A (KAZUICHI NISHINO), 9. Dezember 1985
- PATENT ABSTRACTS OF JAPAN vol. 010, no. 176 (M-491), 20. Juni 1986 & JP 61 025824 A (MULTI GIKEN KK), 4. Februar 1986
- PATENT ABSTRACTS OF JAPAN vol. 007, no. 173 (M-232), 30. Juli 1983 & JP 58 076214 A (YOSHINO KOGYOSHO:KK), 9. Mai 1983

## Beschreibung

Die vorliegende Erfindung betrifft ein Verfahren zum Herstellen einer Schrumpfkappe, mit den Schritten gemäß dem unabhängigen Anspruch 1.

Die Erfindung betrifft ferner eine Schrumpfkappe sowie einen durch die Schrumpfkappe geschützten temperaturabhängigen Schalter.

Ein derartiges Verfahren sowie eine nach dem Verfahren hergestellte Schrumpfkappe sind aus der US 2,997,411 entnehmbar.

Derartige Schrumpfkappen werden als Schüttgut bereitgehalten und auf zu schützende elektrische Bauteile, wie z.B. temperaturabhängige Schalter, aufgeschoben und dann durch den Einsatz von Heißluft aufgeschrumpft, so daß eine Ummantelung entsteht, durch die das Bauteil vor Schmutz, Feuchtigkeit sowie elektrischem Kontakt mit anderen Bauteilen geschützt wird. Aus dieser Ummantelung ragen dann noch die Anschlußelemente des Bauteiles hervor, die häufig als Anschlußlitzen ausgebildet sind.

Derartige Schrumpfkappen werden dadurch hergestellt, daß zunächst von einem Schrumpfschlauch Schrumpfschlauchabschnitte abgelängt werden, die dann vorverformt und an ihrem einen Ende soweit erhitzt werden, daß sich durch den auf dieses Ende von zwei gegenüberliegenden Seiten erfolgenden Angriff von zwei Schweißstempeln eine durch eine Schweiß- oder Prägenaht verschlossene Kante bildet. Diese Kante kann die doppelte Wandstärke des übrigen Schrumpfschlauches aufweisen, so daß sie sehr steif und starr ist. Sie weist dabei einen scharfen Rand und zwei spitze Ecken auf. Beim Aufschrumpfen solcher vorgefertigter Schrumpfkappen auf zu schützende Bauteile bleiben der scharfe Rand sowie die spitzen Ecken erhalten.

Sowohl bei der Konfektionierung der Bauteile mit den Schrumpfkappen als auch bei der Weiterverarbeitung der so ummantelten Bauteile erfolgen viele Verfahrensabschnitte von Hand, wobei die diese Verfahrensschritte durchführenden Personen sehr feinmotorige Arbeiten durchführen müssen, so daß sie keine Schutzhandschuhe tragen können.

Wegen der scharfen Ränder sowie der spitzen Ecken, die an den Schrumpfkappen vorhanden sind, kommt es bei Manipulationen mit den Schrumpfkappen immer wieder um Verletzungen dieser Personen, was selbstverständlich einen großen Nachteil darstellt.

Um diese Verletzungen zu vermeiden, ergreifen die Personen daher die ummantelten Bauteile nicht an der Schrumpfkappe sondern an den Anschlußlitzen, was bei den weiter erforderlichen Manipulationen jedoch häufig dazu führt, daß die Verbindung zwischen der Litze und dem ummantelten Bauteil geschwächt oder gar ganz zerstört wird, so daß das aus solchen Bauteilen gefertigte Gerät häufig Fehlfunktionen aufweist.

Insbesondere dann, wenn die Bauteile temperaturabhängige Schalter sind, die z.B, eine Spule vor Überhitzung schützen sollen, werden die so ummantelten Schalter unmittelbar in Anlage mit der Spule z.B. von Elektromotoren gebracht. Die Schalter werden elektrisch zu der Spule in Reihe geschaltet und unterbrechen den Stromkreis, wenn die Temperatur der Spule einen vorgegebenen Wert übersteigt. Hierzu ist im Inneren des Schalters in an sich bekannter Weise ein Bimetall-Schaltwerk angeordnet.

Damit diese Schutzfunktion sicher erfüllt werden kann, ist es erforderlich, den Schalter im Inneren der Spule anzuordnen oder zumindest sehr dicht an die Spule heranzubringen. Es hat sich jetzt herausgestellt, daß bei diesen Maßnahmen der Spulendraht häufig durch den scharfen Rand und/oder die spitzen Ecken beschädigt wird, wodurch es zu Fehlfunktionen des damit aufgebauten Gerätes kommen kann.

Bei den direkt oder indirekt durch die spitzen Ecken und die scharfen Kanten verursachten Schäden einerseits an den Litzen der Bauteile und andererseits an anderen Bauteilen ist besonders nachteilig, daß diese Schäden häufig bei der Endkontrolle noch gar nicht auftreten, sondern sich erst im Einsatz des betreffenden Gerätes bemerkbar machen.

Die US 5,124,513 beschreibt eine auf einen Schalterhebel aufzuschrumpfende Schrumpfkappe, deren eines, noch offenes Ende in ein PVC-Bad getaucht und anschließend verformt wird. Auf diese Weise entsteht eine Kappe mit einem weichen, flachen Ende, das kein Verletzungsrisiko in sich birgt, da es aus Weich-PVC besteht.

Die Jp-A-58 076 214 beschreibt ein Verfahren, bei dem ein Ende eines Behälters mit einer verdickten, steifen Kante verschlossen wird. Zu diesem Zweck wird ein Schlauch an seinem einen Ende durch zwei Stempel zu einer Kante zusammengedrückt. Dann wird die so entstehende Kante erhitzt, bis sie schmilzt, und danach mit einem Formstempel zu einer gewünschten Länge umgefaltet. Anschließend wird diese Kante mit zwei seitlich angreifenden Stempeln zusammengedrückt, die die Kante dadurch formen und versiegeln.

Das DE-U 90 10 609 zeigt ein Verfahren zum Verschließen eines Schrumpfschlauches, der an seiner Innenseite mit einem Heißkleber versehen ist. Ein Ende des Schlauches wird mit einer Klammer zusammengepresst und dann erhitzt, wodurch der Heißkleber den Schlauch verschließt. Die Trennebene kann kreisbogenförmig ausgebildet werden, um Spitzen und scharfe Kanten zu vermeiden.

Vor diesem Hintergrund ist es Aufgabe der vorliegenden Erfindung, eine Schrumpfkappe sowie ein Verfahren zu ihrer Herstellung bereitzustellen, bei der bzw. dem die Gefahr der Beschädigung oder Verletzung auf einfache Weise verringert wird.

Bei dem eingangs genannten Verfahren wird diese Aufgabe erfindungsgemäß gelöst durch den weiteren Schritt:
c) Verformen der Kante, so daß ihr scharfer Rand und ihre spitzen Ecken aus der Symmetrieebene weggebogen werden, wobei zum Verformen ein Formstempel gegen die Kante gedrückt wird.

Erfindungsgemäß wird weiter eine Schrumpfkappe zum Aufschieben und Aufschrumpfen auf einen temperaturabhängigen Schalter bereitgestellt, die ein offenes erstes Ende zum Aufschieben auf das Bauteil und ein durch eine eine Kante ausbildende Schweiß- oder Prägenaht verschlossenes zweites Ende aufweist, wobei die Kante so weggebogen ist, daß ihr Rand nach oben und leicht nach innen gebogen ist und ihre Ecken im wesentlichen außerhalb einer Symmetrieebene des Schrumpfschlauchabschnittes liegen.

Ferner ist erfindungsgemäß ein temperaturabhängiger Schalter mit einer derartigen Schrumpfkappe versehen.

Die der Erfindung zugrundeliegende Aufgabe wird auf diese Weise vollkommen gelöst.

Der Erfinder der vorliegenden Anmeldung hat nämlich erkannt, daß die oben beschriebenen Nachteile schon dadurch beseitigt werden können, daß die Ränder und Kanten der Schrumpfschläuche aus der Symmetrieebene weggebogen werden. Da beim Stand der Technik diese Ränder und Ecken in der Symmetrieebene liegen, weisen sie in die Richtung, in der die so ummantelten Bauteile z.B. in eine Spule eingeschoben werden. Dadurch gelangen der Rand und die Kanten aber automatisch beim Einschieben des Bauteiles in Kontakt mit Teilen der Spule, wodurch die oben erwähnten Beschädigungen hervorgerufen werden. Das gleiche Problem liegt bei dem Aufschieben der Schrumpfkappen auf zu schützende Bauteile vor, hier zeigen bei bekannten Schrumpfkappen der Rand und die scharfen Ecken in die zu dem Bauteil entgegengesetzte Richtung, so daß die mit der Konfektionierung der Bauteile befaßten Personen die Schrumpfkappen durch Druck auf die Ecken und den scharfen Rand aufschieben, wodurch die ebenfalls bereits besprochenen Verletzungen auftreten.

Die Verwendung eines Formstempels ist im Hinblick auf eine einfache Fertigung von Vorteil, denn nach der Ausbildung der Schweiß- oder Prägenaht wird die Schrumpfkappe lediglich noch einmal im Bereich der Kante erhitzt, woraufhin dann oder während dessen ein Formstempel z.B. von vorne und in der Symmetrieebene auf die Kante drückt und diese nach oben oder unten wegbiegt. Sobald die Kante wieder abkühlt, erhärtet sie in der durch den Formstempel vorgegebenen Form.

Von besonderem Vorteil ist dabei, daß die Kante im Schritt c) aus der Symmetrieebene weggebogen wird.

Diese Maßnahme ist an sich überraschend, denn der Rand und die Kante werden weder abgerundet noch entfernt, sondern lediglich aus der Symmetrieebene herausgebogen. Der Erfinder der vorliegenden Anmeldung hat erkannt, daß schon ein geringfügiges Ablenken aus der Symmetrieebene ausreicht, um die Verletzungsgefahr sowohl für Personen als auch für Geräte deutlich zu verringern.

Dabei ist es bevorzugt, wenn der Schrumfschlauchabschnitt im Schritt c) zum Verformen der Kante zumindest im Bereich der Kante erhitzt wird.

Hier ist von Vorteil, daß sich durch ein Erhitzen der Kante diese deutlich leichter abbiegen und verformen läßt, ohne daß durch die Verformung weitere scharfkantige Bereiche entstehen.

Dabei ist es bevorzugt, wenn der Schrumpfschlauchabschnitt bereichsweise durch Heißluft erhitzt oder aber der Formstempel geheizt wird.

Während der Vorteil der Verwendung von Heißluft darin liegt, daß dies ein sehr preiswerter Verfahrensschritt ist, da in der Regel auch das Vorformen und Ausbilden der Schweiß- oder Prägenaht durch Heißluft unterstützt wird, so daß diese sowieso verfügbar ist, liegt der Vorteil des geheizten Formstempels darin, daß die Kante gezielt dort erhitzt wird, wo sie verformt wird, daß also der zu verformende Bereich genau vorgegeben werden kann.

Allgemein ist es bevorzugt, wenn die Kante im Schritt c) durch den Formstempel zumindest um ca. 90° aus der Symmetrieebene abgebogen wird.

Hier ist von Vorteil, daß sich jetzt ein sehr geringer Abstand zwischen dem Rand der Kante sowie dem vorderen Ende der Schrumpfkappe ergibt, wobei durch diesen geringen Abstand verhindert wird, daß Verletzungen durch den so sozusagen geschützten scharfen Rand hervorgerufen werden können.

Weiter ist es bevorzugt, wenn die Kante im Schritt c) durch den Formstempel um mehr als 90° aus der Symmetrieebene abgebogen wird.

Hier ist von Vorteil, daß auch die Beschädigung von kleinsten Litzen und Drähten noch verhindert wird, da die Kante jetzt sozusagen auf sich selbst aufgerollt wurde, wobei der Rand sowie die Ecken nicht mehr von außen zugänglich sind.

Ein weiterer Vorteil bei dem Abbiegen der Kante aus der Symmetrieebene liegt darin, daß die Schrumpfkappe in der Länge um ca. 1 mm verkürzt wird, so daß ein von ihr umgebenes Bauteil leichter in das zu schützende Gerät eingeschoben werden kann. Ein anderer Vorteil der insoweit beschriebenen Maßnahmen liegt darin, daß die Schrumpfkappe wegen der nunmehr nicht mehr im Weg stehenden Kanten und Ränder nicht so leicht beim Einschieben verhaken kann. Das bedeutet jedoch, daß für das Einschieben des Bauteiles in die dafür vorgesehene Tasche weniger Kraft aufgewendet werden muß, so daß die Belastungen an den Anschlußlitzen zurückgehen, was wiederum die Gefahr der Beschädigung reduziert.

weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist in der Zeichnung dargestellt und wird in der nachfolgenden Beschreibung näher erläutert. Es zeigen:
- Fig. 1: eine schematische Darstellung einer Schrumpfkappe aus dem Stand der Technik, in mehreren Ansichten;
- Fig. 2: eine erfindungsgemäße Schrumpfkappe in Seitenansicht sowie in Draufsicht; und
- Fig. 3: schematisch angedeutet die Verfahrensschritte zur Herstellung der Schrumpfkappe aus Fig. 2 aus einem endlosen Schrumpfschlauch.

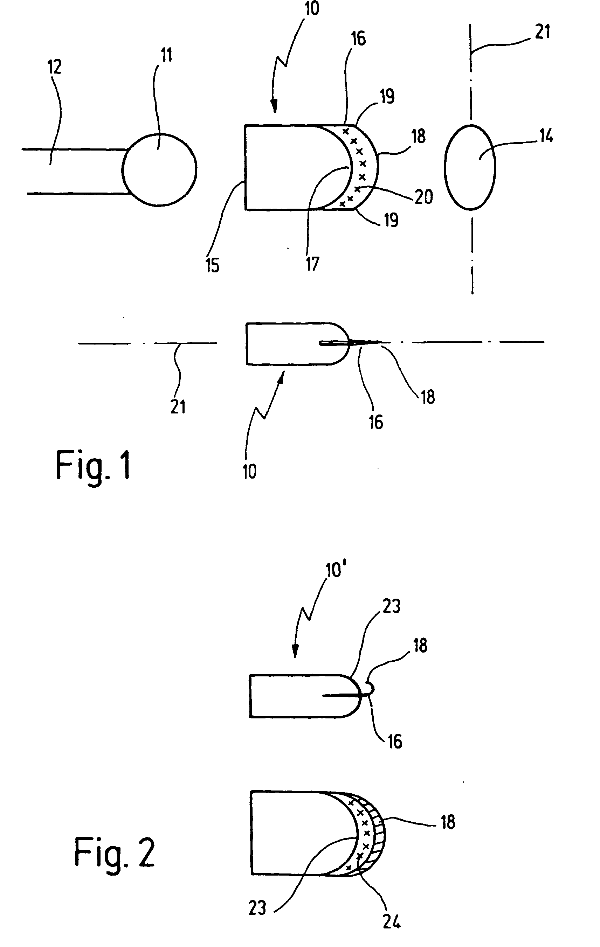

In Fig. 1 ist mit 10 eine Schrumpfkappe bezeichnet, wie sie aus dem Stand der Technik bekannt ist. Die Schrumpfkappe 10 dient dazu, auf ein Bauteil 11 aufgeschoben zu werden, dessen Außenanschlüsse 12 hier Anschlußlitzen sind. Die Schrumpfkappe 10, deren Profil im Querschnitt bei 14 gezeigt ist, wird mit ihrem offenen Ende 15 auf das Bauteil 11 aufgeschoben und dann durch Einsatz heißer Luft aufgeschrumpft, so daß aus der so gebildeten Ummantelung nur noch die Außenanschlüsse 12 herausragen.

Die Schrumpfkappe 10 weist in diesem Zusammenhang ein durch eine starre Kante 16 verschlossenes Ende 17 auf. Die Kante 16 zeigt einen nach vorne weisenden scharfen Rand 18 sowie zwei außenliegende spitze Ecken 19. Bei 20 ist noch eine Schweißnaht angedeutet, die bei der Ausbildung der Kante 16 entstanden ist.

Im unteren Bereich der Fig. 1 ist die Schrumpfkappe 10 in Seitenansicht dargestellt, so daß die nach vorne über die Schrumpfkappe 10 überstehende Kante 16 mit ihrem scharfen Rand 18 gut zu erkennen ist. Es sei noch bemerkt, daß die Kante 18 im wesentlichen in einer bei 21 angedeuteten Symmetrieebene der Schrumpfkappe 10 liegt.

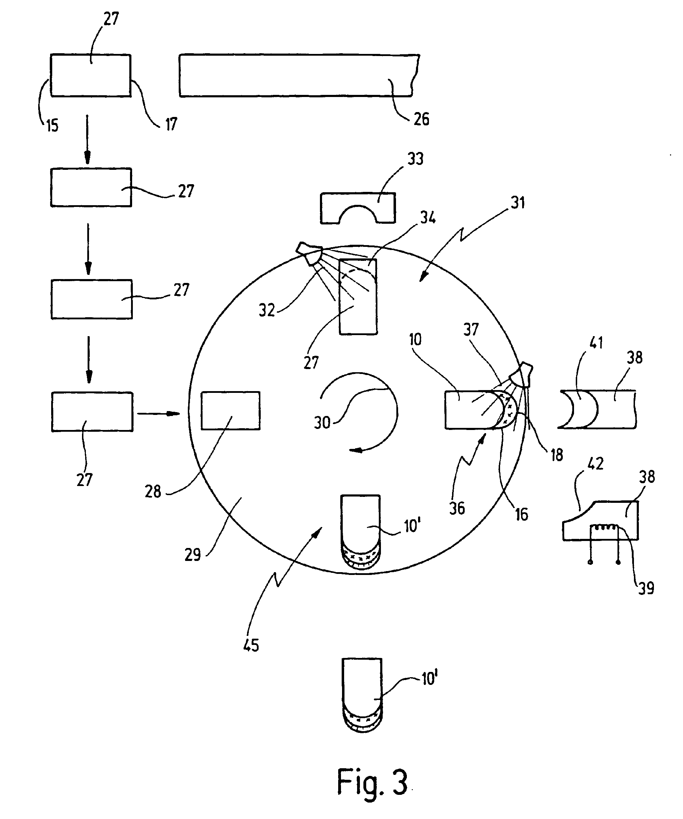

Der scharfe Rand 18 sowie die spitzen Ecken 19 bedingen jetzt eine Verletzungsgefahr für Personen sowie die Gefahr der Beschädigung von anderen Bauteilen. Erfindungsgemäß wird dies dadurch verhindert, daß die Kante 16 in Richtung eines in Fig. 1 mit 22 angedeuteten Pfeiles aus der Symmetrieebene 21 herausgebogen wird. Das Ergebnis dieser Maßnahme ist in Fig. 2 zu sehen.

Die dort gezeigte neue Schrumpfkappe 10' weist eine deutlich kürzere Kante 16 auf, als dies bei der Schrumpfkappe 10 aus Fig. 1 der Fall ist. Der Rand 18 der Kante 16 ist nach oben und leicht nach innen gebogen, so daß keine Verletzungsgefahr mehr besteht. Zwischen dem Rand 18 und einer Wölbung 23 des rechten, verschlossenen Ende 17 ist jetzt ein so geringer Abstand 24 vorhanden, daß Personen sich an dem Rand 18 nicht mehr verletzen können. Dieses Nachinnenbiegen der Kante 16 erfolgt derart, daß auch die spitzen Ecken 19 nicht mehr unmittelbar zugängig sind.

In Fig. 3 ist jetzt schematisch ein Verfahren dargestellt, mit dem die neuen Schrumpfkappen 10' aus einem Schrumpfschlauch 26 hergestellt werden.

Zunächst werden von dem Schrumpfschlauch 26 kurze Schrumpfschlauchabschnitte 27 mit gegenüberliegenden, noch offenen Enden 15, 17 abgeschnitten. Diese Schrumpfschlauchabschnitte 27 werden dann nacheinander auf ein Profil 28 aufgeschoben, das auf einem Drehteller 29 sitzt. Nach dem Aufschieben wird der Drehteller in Richtung eines Pfeiles 30 um 90° verdreht, so daß der jeweilige Schrumpfschlauchabschnitt 27 in eine Schweißposition 31 gelangt. Dort wird der Schrumpfschlauchabschnitt 27 durch bei 32 angedeutete Heißluft erhitzt und vorverformt, wobei gleichzeitig zwei Schweißstempel auf das Ende 17 einwirken. Einer dieser Schweißstempel ist bei 33 im Profil gezeigt. Bei 34 ist noch gezeigt, wo der Schweißstempel 33 an dem Schrumpfschlauchabschnitt 27 angreift. In der Regel kommen die Schweißstempel 33 von oben und von unten und pressen dabei das Schrumpfschlauchende zusammen, wobei durch die Erhitzung eine Schweiß- oder Prägenaht ausgebildet wird und die Kante 16 entsteht.

Insoweit entspricht das beschriebene Verfahren dem Stand der Technik, die hergestellte Schrumpfkappe 10 weist die in der Fig. 1 gezeigte Form auf. Der Drehteller 29 wird jetzt um weitere 90° in Richtung des Pfeiles 30 verdreht, so daß die Schrumpfkappe 10 in eine Formposition 36 gelangt. Hier wird im Bereich der Kante 16 Heißluft 37 verwendet, um die Kante 16 verformbar zu machen. Gleichzeitig wird etwa in der Symmetrieebene von vorne ein Formstempel 38 gegen die Kante 16 gedrückt, um diese aus der Symmetrieebene herauszubiegen, so daß die neue Schrumpfkappe 10' gemäß Fig. 2 entsteht.

Der Schweißstempel 38 ist in Fig. 3 rechts sowohl in Draufsicht als auch in Seitenansicht gezeigt, wobei die Seitenansicht noch eine Heizung 39 aufweist, die statt der Heißluft 37 verwendet werden kann, um die Kante 16 vor dem Verformen oder bei dem Verformen zielgenau zu erhitzen.

Der Formstempel 38 weist einen Formbereich 41 mit geneigter, gebogener Flanke 42 auf und ist im übrigen in der Draufsicht an die Rundung des Randes 18 derart angepaßt, daß durch das Verschieben des Formstempels 38 auf die Kante 16 zu diese sich an ihren Ecken 19 sowie ihrem Rand 18 nach oben aus der Symmetrieebene herausbiegt, so daß die neue Schrumpfkappe 10' gemäß Fig. 2 entsteht. Dabei ist es selbstverständlich nicht erforderlich, daß der Rand 18 sozusagen nach innen gerollt ist, es reicht vielmehr aus, wenn dieser um ca. 90° aus der Symmetrieebene 21 nach oben gebogen wurde.

Der Drehteller 29 dreht sich noch einmal um 90° in Richtung des Pfeiles 30, so daß die Schrumpfkappe 10' in ihre Ausstoßposition 45 gelangt.

## Patentansprüche

1. Verfahren zum Herstellen einer Schrumpfkappe (10, 10'), mit den Schritten:
a) Bereitstellen eines an seinen beiden Enden (14, 17) je eine Öffnung aufweisenden Schrumpfschlauchabschnittes (27), und
b) Zusammendrücken des Schrumpfschlauchabschnittes (27) an seinem einen Ende (17) und Erzeugen einer eine Kante (16) ausbildenden Schweiß- oder Prägenaht (20), um die entsprechende Öffnung zu verschließen, wobei die Kante (16) im wesentlichen in einer Symmetrieebene (21) des Schrumpfschlauchabschnittes (27) liegt, wobei die Kante (16) einem scharten Rand (13) und spitze Ecken (19) aufweist,
**gekennzeichnet durch** den weiteren Schritt:
c) Verformen der Kante (16), so daß ihr scharfer Rand (18) und ihre spitzen Ecken (19) aus der Symmetrieebene (21) weggebogen werden, wobei zum Verformen ein Formstempel (38) gegen die Kante (16) gedrückt wird.

2. Verfahren nach Anspruch 1, **dadurch gekennzeichnet, daß** der Schrumpfschlauchabschnitt (27) im Schritt c) zum Verformen der Kante (16) zumindest im Bereich der Kante (16) erhitzt wird.

3. Verfahren nach Anspruch 1 oder 2, **dadurch gekennzeichnet, daß** der Schrumpfschlauchabschnitt bereichsweise durch Heißluft (32, 37) erhitzt wird.

4. Verfahren nach einem der Ansprüche 1 bis 3, **dadurch gekennzeichnet, daß** der Formstempel (38) geheizt wird.

5. Verfahren nach einem der Ansprüche 1 bis 4, **dadurch gekennzeichnet, daß** die Kante (16) im Schritt c) durch den Formstempel (38) zumindest um ca. 90° aus der Symmetrieebene (21) abgebogen wird.

6. Verfahren nach Anspruch 5, **dadurch gekennzeichnet, daß** die Kante (16) um mehr als 90° abgebogen wird.

7. Schrumpfkappe zum Aufschieben und Aufschrumpfen auf einen temperaturabhängigen Schalter, mit einem offenen ersten Ende (15) zum Aufschieben auf das Bauteil (11) und einem durch eine eine Kante (16) ausbildende Schweiß- oder Prägenaht (20) verschlossenen zweiten Ende (17), **dadurch gekennzeichnet, daß** die Kante (16) zumindest um ca. 90° aus einer Symmetrieebene (21) der Schrumpfkappe (10) weggebogen ist, und ihre Ecken (19) im wesentlichen außerhalb einer Symmetrieebene (21) der Schrumpfkappe (10, 10') liegen.

8. Temperaturabhängiger Schalter, mit einer aufgeschrumpften Schrumpfkappe nach Anspruch 7.

## Claims

1. A method for manufacturing a shrink-on cap (10, 10'), comprising the steps of:
a) providing a heat-shrink tubing section (27) having an opening at each of its two ends (14, 17); and
b) pressing the heat-shrink tubing section (27) together at its one end and producing a welded or pressed seam (20), constituting a rim (16), in order to close off the respective opening, the rim (16) lying substantially in a plane (21) of symmetry of the heat-shrink tubing section (27); whereby said rim (16) comprises a sharp edge (18) and pointed corners (19),
**characterized by** the further step of:
c) deforming said rim (16) such that its sharp edge (18) and its pointed corners (19) are bent out of the plane (21) of symmetry, whereby a shaping punch (38) is pressed against said rim (16) in order to deform it.

2. The method of claim 1, **characterized in that** in step c), the heat-shrink tubing section (27) is heated at least in the region of the rim (16) in order to deform the rim (16).

3. The method of claim 1 or claim 2, **characterized in that** the heat-shrink tubing section is heated locally by hot air (32, 37).

4. The method of anyone of claims 1 through 3, **characterized in that** the shaping punch (38) is heated.

5. The method of anyone of claims 1 through 4, **characterized in that** in step c) said rim (16) is bent by said shaping punch (38) at least approximately 90 degree out of said plane (21) of symmetry.

6. The method of claim 5, **characterized in that** said rim (16) is bent more than 90 degree.

7. A shrink-on cap to be slid and shrunk onto a temperature-dependent switch, said cap having an open first end (15) for sliding onto the component (11) and a second end (17) closed off by a welded or pressed seam (20) constituting a rim (16), **characterized in that** said rim (16) is bent by at least approximately 90 degree out of a plane (21) of symmetry of said shrink-on cap (10), and that its edges (19) lie substantially outside a plane (21) of symmetry of said shrink-on cap (10, 10').

8. Temperature-dependent switch having a shrinked-on shrink-on cap of claim 7.

## Revendications

1. Procédé pour la fabrication d'un capuchon rétractable (10, 10'), avec les étapes suivantes :
a) Fourniture d'un tronçon de tube flexible rétractable (27) comportant une ouverture à chacune de ses deux extrémités (14, 17), et
b) Compression du tronçon de tube flexible rétractable (27) à l'une de ses extrémités (17) et formation d'un cordon de soudure ou d'estampage (20) formant une arête (16) pour obturer l'ouverture correspondante, l'arête (16) se trouvant sensiblement dans un plan de symétrie (21) du tronçon de tube flexible rétractable (27), l'arête (16) comportant un bord vif (18) et des angles aigus (19),
**caractérisé par** l'étape supplémentaire de :
c) Déformation de l'arête (16) de sorte que son bord vif (18) et ses angles aigus (19) soient courbés à l'opposé du plan de symétrie (21), une matrice d'estampage (38) étant pressée contre l'arête (16) pour la déformation.

2. Procédé selon la revendication 1, **caractérisé en ce que** le tronçon de tube flexible rétractable (27) est chauffé pendant l'étape c) au moins dans la zone de l'arête (16) pour la déformation de l'arête (16).

3. Procédé selon la revendication 1 ou 2, **caractérisé en ce que** le tronçon de tube flexible rétractable (27) est chauffé par zones à l'aide d'air chaud (32, 37).

4. Procédé selon l'une quelconque des revendications 1 à 3, **caractérisé en ce que** la matrice d'estampage (38) est chauffée.

5. Procédé selon l'une quelconque des revendications 1 à 4, **caractérisé en ce que** l'arête (16) est pliée à l'aide de la matrice d'estampage (38) sur au moins environ 90° par rapport au plan de symétrie (21) pendant l'étape c).

6. Procédé selon la revendication 5, **caractérisé en ce que** l'arête (16) est pliée sur plus de 90°.

7. Capuchon rétractable pour la fermeture et le frettage sur un commutateur variable en fonction de la température, avec une première extrémité ouverte (15) pour le déplacement sur l'élément de construction (11) et une seconde extrémité (17) obturée par un cordon de soudure ou d'estampage (20) formant une arête (16), **caractérisé en ce que** l'arête (16) est courbée à l'opposé d'un plan de symétrie (21) du capuchon rétractable (10) sur au moins environ 90° et **en ce que** ses angles (19) se trouvent sensiblement à l'extérieur d'un plan de symétrie (21) du capuchon rétractable (10, 10').

8. Commutateur variable en fonction de la température, avec un capuchon rétractable fretté selon la revendication 7.
